# EUROPÄISCHE PATENTSCHRIFT

(11) **EP 1 784 350 B1**
(45) Veröffentlichungstag und Bekanntmachung des Hinweises auf die Patenterteilung: **01.07.2009**
(21) Anmeldenummer: 05778907.5
(22) Anmeldetag: 26.08.2005
(51) Int. Cl.: B65G 47/08, B65B 35/40

(54) **VORRICHTUNG ZUM GRUPPIEREN VON STÜCKGUT**
DEVICE FOR GROUPING PIECE GOODS
DISPOSITIF DE GROUPAGE DE MARCHANDISES DE DETAIL

(30) Priorität: 02.09.2004 DE 102004042474
(43) Veröffentlichungstag der Anmeldung: 16.05.2007
(73) Patentinhaber: KRONES AG, 93073 Neutraubling (DE)
(72) Erfinder: FLECK, Norbert, 83349 Palling (DE); SCHMID, Bernhard, 83115 Neubeuren (DE)
(86) Internationale Anmeldenummer: PCT/EP2005/009214
(87) Internationale Veröffentlichungsnummer: WO 2006/024460

(56) Entgegenhaltungen:
- EP-A- 0 906 235
- DE-A1- 4 036 341
- JP-A- 49 015 597
- NL-A- 285 061
- US-B1- 6 321 896
- PATENT ABSTRACTS OF JAPAN Bd. 015, Nr. 310 (M-1144), 8. August 1991 (1991-08-08) -& JP 03 115015 A (SEKISUI CHEM CO LTD), 16. Mai 1991 (1991-05-16)
- PATENT ABSTRACTS OF JAPAN Bd. 1998, Nr. 12, 31. Oktober 1998 (1998-10-31) -& JP 10 181714 A (KIRIN BREWERY CO LTD), 7. Juli 1998 (1998-07-07)
- PATENT ABSTRACTS OF JAPAN Bd. 2000, Nr. 20, 10. Juli 2001 (2001-07-10) & JP 2001 080736 A (OKURA YUSOKI CO LTD), 27. März 2001 (2001-03-27)

## Beschreibung

Die Erfindung betrifft eine Vorrichtung nach dem Oberbegriff des Anspruchs 1.

Solche Gruppiervorrichtungen werden vor allem in Produktionsanlagen bei der Massenproduktion von Stückgütern eingesetzt. Die Güter befinden sich beim Transport zwischen den Behandlungsmaschinen in einem mehr oder weniger geschlossenen Produktstrom. Dieser muss, je nach Kapazität und Aufbau der Behandlungsmaschine, in unterschiedlich große Teilgruppen eingeteilt werden. Eine solche Einteilung ist unter anderem auch in der Lebensmittelindustrie, insbesondere in der Getränkeindustrie nötig. Dort wird unter anderem der Produktstrom von Getränkebehältern, wie z.B. Flaschen oder Dosen, vor einer Verpackungsmaschine gruppiert, um verkaufsgerechte Verpackungseinheiten zu produzieren.

Im Stand der Technik sind bereits verschiedene Gruppiervorrichtungen für mehr oder weniger geschlossene Produktströme bekannt. So zeigt z.B. die deutsche Offenlegungsschrift DE 3144449 A1 eine Gruppiervorrichtung, deren Einteilerfinger aufweisende Traversen von unten in einen geschlossenen Produktstrom eingreifen, um diesen auf Grund unterschiedlicher Geschwindigkeiten der Förderbahn und der Traversen mit Lücken zu versehen und dadurch zu gruppieren. Die Traversen laufen dabei in einer geschlossenen Umlaufbahn um, die sich in einer Ebene befindet, die senkrecht auf der Transportebene steht. Der Nachteil dieser Erfindung ist es, dass eine schnelle Umstellung der Größe der Erfindung ist es, dass eine schnelle Umstellung der Größe der Gruppiereinheiten nicht möglich ist. Soll dies geschehen, so muss die Maschine angehalten und es müssen mechanische Einstellungen und Anpassungen vorgenommen werden.

Bei der deutschen Offenlegungsschrift DE 4036341 A1 handelt es sich um eine Gruppiereinrichtung zum Abtrennen von Behältergruppen aus einem Behälterstrom. Die an einem endlos umlaufenden Antriebselement befestigten Gruppierelemente sind mit Anschlag- und Stauflächen versehen. Die Gruppierelemente sind zwar einstellbar, so dass sie auf verschiedene Behälterdurchmesser anpassbar sind, jedoch ist es mit dieser Vorrichtung nicht möglich, die Anzahl der Behälter in einer gruppierten Einheit beliebig zu bestimmen.

Die deutsche Patentschrift DE 3029508 C2 offenbart eine Vorrichtung zum Gruppieren von Werkstücken bei der Speichen, an denen die Einteiler befestigt sind, an einer gemeinsamen Welle befestigt sind. Durch das Auf- und Abbewegen der Welle und die damit verbundene Abstandsveränderung von der Welle zur Transportebene kann die abzutrennende Pulklänge eingestellt werden. Eine Umstellung der Länge der abzutrennenden Stückgutreihen ist jedoch relativ kompliziert, da nicht nur der Abstand der Welle von der Transportebene sondern auch die Länge der Umlaufführungen verändert werden muss. Eine flexible Gestaltung der Pulklängen innerhalb weniger Umdrehungen ist also praktisch nur schwer durchführbar.

Das Japanische Dokument JP49015597 zeigt eine gattungsgemäße Vorrichtung zum Gruppieren von Stückgut, wobei hier Einteilerleisten von oben und / oder von unten in eine das Stückgut bewegende Transportebene eingebracht werden können, wobei die verschiedenen Einteilerleisten mit unterschiedlichen Antrieben gekoppelt sind, sodass eine unabhängige Bewegung einstellbar ist. Diese Vorrichtung ist zwar bezüglich der Einstellung auf unterschiedliche Stückgutabmessungen sehr flexibel, weist aber den Nachteil auf, dass sie sehr kompliziert baut.

Es ist deshalb Aufgabe der vorliegenden Erfindung, eine Vorrichtung zum Gruppieren von Gegenständen bereitzustellen, mit der es in einfacher, flexibler und günstiger Weise möglich ist, die Anzahl der Gegenstände in einer zu Außerdem soll eine höchstmögliche Flexibilität dahingehend erreicht werden, dass auf ein und derselben Maschine die verschiedensten Gegenstände mit möglichst beliebig wählbaren Zwischenabständen mit wenig Aufwand gruppiert werden können.

Erfindungsgemäß wird diese Aufgabe durch die Vorrichtung des Anspruchs 1 gelöst.

Das zu gruppierenden Stückgut kann grundsätzlich jede gruppierbare Stückguteinheit sein. Vorzugsweise handelt es sich aber um eine Standfläche aufweisende Behälter wie Flaschen oder Dosen, die beispielsweise Lebensmittel, Reinigungsmittel, Arzneimittel oder dergleichen enthalten. Es können aber auch andere eine Standfläche aufweisende Behälter wie z.B. Kanister, Schachteln oder ähnliche gruppiert werden. Die Anlieferung des Stückguts zur Gruppierstation erfolgt in einem im wesentlichen geschlossenen Strom. Es spielt dabei aber keine Rolle, ob sich die Gegenstände berühren oder ob sie geringfügige Zwischenabstände aufweisen. Bei dem Transportmittel, auf dem die Stückgüter transportiert werden, kann es sich um Bänder, Ketten oder dgl. handeln. Es ist auch denkbar, dass die Gegenstände auf Werkstückträgern (Sklaven) positioniert in die Gruppierstation eingefahren werden. Bei dem verwendeten Transportsystem muss sichergestellt werden, dass Aussparungen in der Transportfläche vorhanden sind, durch die Transportfinger hindurchgreifen und damit in Eingriff mit dem Stückgut kommen können.

Die Form des mindestens einen Einteilfingers kann verschieden ausgebildet sein. So ist es denkbar, dass der mindestens eine Einteilfinger einen flachen oder einen runden Querschnitt aufweist. Es ist auch möglich, dass sich die Form des Einteilfingers an die Form der zu gruppierenden Gegenstände anpasst. Allerdings muss dann beim Wechsel der zu gruppierenden Gegenstände auch ein Formatteilwechsel der Einteilerleisten und/oder der Einteilerfinger vorgenommen werden. Der bzw. die Einteilerfinger befinden sich auf einer Einteilerleiste, die sich im Laufe eines Gruppiervorgangs auf einer geschlossenen Umlaufbahn bewegt. Die Umlaufebene steht dabei senkrecht auf der Transportebene. Eine Bewegungskomponente in Förderrichtung der Behälter stellt eine Bewegung in Y-Richtung dar. Bei einer Bewegung in Z-Richtung dagegen handelt es sich um eine Bewegung der Einteilerfinger und/oder der Einteilerleiste in Richtung, d.h. quer bzw. senkrecht zur Transportebene.

Der gesamte Umlauf der Einteilerfinger und der Einteilerleiste in einem Gruppiervorgang lässt sich in Bewegungskomponenten in Y-und Z-Richtung zerlegen. Die Bewegung des mindestens einen Einteilerfingers in Y-Richtung und des mindestens einen Einteilfingers in Z-Richtung erfolgt nicht zwangsgekoppelt, sondern durch eine gesteuerte Überlagerung beider Bewegungen und ist somit unabhängig voneinander ausführbar. Sie folgen dennoch einem voreingestellten Weg (Bahnkurve), um die Reproduzierbarkeit des Gruppiervorgangs zu gewährleisten.

Die verschiedenen Bewegungsabläufe (Bahnkurven, Geschwindigkeitsprofile) für verschiedene Behälter oder für eine differenzierte Anzahl von Behältern, sind in Programmspeichern einer Steuerung vorgebbar festgehalten. Dass die Bewegungskomponenten in Y- und in Z-Richtung unabhängig voneinander und frei einstellbar sind, bedeutet, dass die Bewegungen der Einteilerleiste und der Einteilerfinger optimal auf die zu gruppierenden Behälter eingestellt werden können. Werden zum Beispiel Behälter gruppiert, die sehr hoch sind, so braucht gegebenenfalls nur die Bewegungskomponente der Einteilfinger in Z-Richtung vergrößert zu werden, sodass sie weiter aus der Transportebene ragen um die Behälter vor Kippen zu sichern, ohne die Bewegungskomponente der Einteilerleiste in Y-Richtung zu verändern. Es können ferner zum Beispiel zyklisch wiederkehrend unterschiedliche Zwischenabstände oder Pulklängen erzeugt werden.

Das Steuergerät kann z.B. als handelsüblicher PC oder als Industrie PC ausgebildet sein. Es ist aber auch möglich, dass es sich bei dem Steuergerät um ein Programmiergerät oder um eine SPS handelt. Es verfügt über mindestens einen Programmspeicher, in dem Daten, Werte und Programme abgespeichert werden können. Daten und Werte können zum Beispiel Parameter sein, die den Bewegungsablauf wie zum Beispiel die Beschleunigung der mindestens einen Einteilerleiste und/oder der Einteilerfinger bestimmen. Bestimmte Werte können aber auch die Höhe, der Durchmesser oder dergleichen Informationen über das Stückgut sein, aus denen bestimmte Bewegungsabläufe bzw. Bewegungsinformationen ermittelt werden. Zum Beispiel können bei großen Stückguthöhen die Einteilerfinger weiter aus der Transportebene ragen, um ein Kippen zu verhindern oder die Beschleunigung der Einteilerleiste bei der Bewegung des Stückguts in Y-Richtung kann verringert werden. Im Programmspeicher können auch verschiedene Programme abgespeichert werden, die beispielsweise die Bewegungsabläufe der Einteilerleiste vorgeben. So ist es denkbar, dass mit einem erfindungsgemäßen Stückgutgruppierer nicht immer gleiche Stückgutgruppen vom gleichförmigen Stückgutstrom abgetrennt werden. Dies kann zum Beispiel nötig werden, wenn der Stückgutgruppierer vor einer Palettiereinheit oder verpackungsmaschine steht und Stückgutlagen mit verschiedenen Lagemustern erzeugt werden sollen.

Eine bevorzugte Ausführungsform besteht darin, dass zwei Einteilerleisten mit jeweils mindestens einem Einteilerfinger vorhanden sind. Durch das Vorhandensein von zwei Einteilerleisten ist sichergestellt, dass immer mindestens eine mit den Behältern in Eingriff steht. Die andere kann ihre Position einstweilen verändern, um wieder in die Ausgangsposition für den nächsten Gruppiervorgang gebracht zu werden. In einer weiteren bevorzugten Weiterbildung wird jedes Stückgut von zwei Einteilerfingern geführt. Damit ist eine Zentrierung und sichere Abstützung des Stückguts während der Gruppierung gewährleistet.

Ist mehr als eine Einteilerleiste vorhanden, so sind die Bewegungen in Transportrichtung unabhängig voneinander einstellbar. Das heißt, das z.B. eine Geschwindigkeitserhöhung der einen Einteilerleiste nicht zwangsläufig eine Geschwindigkeitserhöhung der anderen Einteilerleiste nach sich zieht. Somit ergibt sich, dass auch die Abstände der Einteilerleisten zueinander nicht immer konstant sein müssen. Das bedeutet aber auch, dass es möglich ist, Gruppiervorgänge so variabel zu gestalten, dass beispielsweise zuerst zwei Mal vier Behälter und dann ein Mal drei Behälter gruppiert werden. Die Anzahl der Reihen pro Gruppe muss also nicht gleich sein.

In einer bevorzugten Weiterbildung besitzen die vorhandenen Einteilerleisten jeweils mindestens eine eigene Antriebseinheit, insbesondere eine motorische Antriebseinheit, um die Bewegung in Y-Richtung zu bewerkstelligen. Auch der mindestens eine Einteilerfinger oder die mechanisch fest miteinander verbundenen mehreren Einteilerfinger pro Einteilerleiste sind mit einer Antriebseinheit verbunden, die die Bewegung in Z-Richtung durchführt. Eine weitere Variante besteht darin, dass jeder Einteilerfinger auf jeder Einteilerleiste eine eigene Antriebseinheit zur Durchführung der Bewegung in Z-Richtung besitzt. Dadurch können die Einteilerfinger einer Einteilerleiste verschieden weit in die Transportebene hineinragen. Bei den Antriebseinheiten kann es sich sowohl um Motoren, wie Servo- oder Linearmotoren als auch um pneumatische oder hydraulische Komponenten wie Pneumatik- oder Hydraulikzylinder oder um nichtelektrische Servoantriebe wie Pneumatik-Linear-Servo-Antriebe handeln. Auch die Verwendung von Direktantrieben ist denkbar.

Zudem kann die unabhängig voneinander ausführbare Bewegung der Einteilerleisten und / oder Einteilerfinger in X- und Z-Richtung durch Parallel-Kinematiken oder Kniehebelmechanismen durchgeführt werden.

In einer weiteren, kostengünstigen Ausführungsform ist es denkbar, dass bestimmte Bewegungskomponenten durch das Anfahren von Zylinderendpositionen durchgeführt werden. Will man beispielsweise für die Bewegung der Einteilerleisten oder Einteilerfinger in Z-Richtung keine teuren motorischen Antriebseinheiten verwenden, so können auch Zylinder eingebaut werden, deren Anfangs- und Endposition angefahren werden kann, um die Schaltpositionen "Einteilerfinger außer Eingriff mit dem Stückgutstrom" und "Einteilerfinger in Eingriff mit dem Stückgutstrom" realisieren zu können.

Weiterhin ist es möglich, jeden Motor mit einer eigenen Steuerungs- und Regelungseinheit zu versehen, die sich um die korrekte Ausführung der Bewegungskomponenten in Y- und Z-Richtung kümmern. In diesem Fall können die einzelnen Steuerungs- und Regelungseinheiten über ein Kommunikationssystem, wie z.B. über ein drahtgebundenes Bussystem oder ein drahtloses Funksystem, untereinander und/oder mit einer Zentraleinheit verknüpft sein, die bestimmte Bewegungsabläufe aus dem Programmspeicher entnehmen und an die einzelnen Steuerungs- und Regelungseinheiten weiterleiten kann.

Die Bewegung der Einteilerleisten in Y-Richtung und die Bewegung der Einteilerfinger in Z-Richtung erfolgt erfindungsgemäß entlang von Gewindespindeln.

Eine bevorzugte Weiterbildung der Erfindung besteht darin, dass die Bewegung der Einteilerfinger in Z-Richtung durch die Bewegung der Einteilerleisten in Z-Richtung verursacht wird. D.h. also, dass die Einteilerfinger fest an den Einteilerleisten montiert sind und die Bewegung der Einteilerfinger indirekt durch die Bewegung der Einteilerleisten stattfindet.

Eine andere Ausführungsform besteht darin, dass sich bei der Bewegung der Einteilerfinger in Z-Richtung die Einteilerleiste in ihrer Position nicht verändert. D.h. also, dass die Einteilerfinger aus der bzw. in die Einteilerleiste gefahren werden können, bzw. in Z-Richtung gesehen über dieser angeordnet sind.

Nach dem Beenden des Gruppiervorgangs werden die Einteilerfinger aus der Transportebene nach unten und damit außer Eingriff mit den Stückgütern gebracht. Diese Einteilerleiste bewegt sich nun entgegen der Transportrichtung der Behälter um dann erneut mit den Stückgütern in Eingriff gebracht zu werden. Die Einteilerleiste bewegt sich dazu unterhalb der anderen Einteilerleiste, die gerade in Eingriff mit dem Stückgut steht. Hat sie die entgegen der Laufrichtung der Behälter geführte Bewegung vollzogen, so werden die Einteilerfinger nach einer Bewegungsumkehr erneut in die Transportebene gefahren und mit den Stückgütern in Eingriff gebracht.

In einer bevorzugten Weiterbildung der Erfindung ist die Vorschubgeschwindigkeit der mindestens einen Einteilerleiste in der Eingriffstellung geringer als die Vorschubgeschwindigkeit des Transportmittels. Das bedeutet, dass die Einteilerfinger für die Stückgüter als Stauflächen wirken. In einer weiteren Ausführungsform der Erfindung ist die Geschwindigkeit der mindestens einen Einteilerleiste in Transportrichtung höher als die Vorschubgeschwindigkeit des Transportmittels. In diesem Fall müssen die Einteilerfinger in Transportrichtung gesehen hinter der einzuteilenden Stückgutgruppe mit dieser in Eingriff kommen, um diese beschleunigt mit Schlupf über das Transportmittel "zu schieben".

Nachfolgend wird eine bevorzugte Ausführungsform anhand von Zeichnungen näher erläutert. Dabei zeigen:
- Fig. 1: eine schematische Draufsicht auf eine erfindungsgemäße Vorrichtung,
- Fig. 2: eine Seitenansicht der Einteilerfinger und der Einteilerleiste der Vorrichtung nach Figur 1 und
- Fig. 3a- 3c: einen kompletten Gruppierzyklus aus einer Seitenansicht betrachtet.

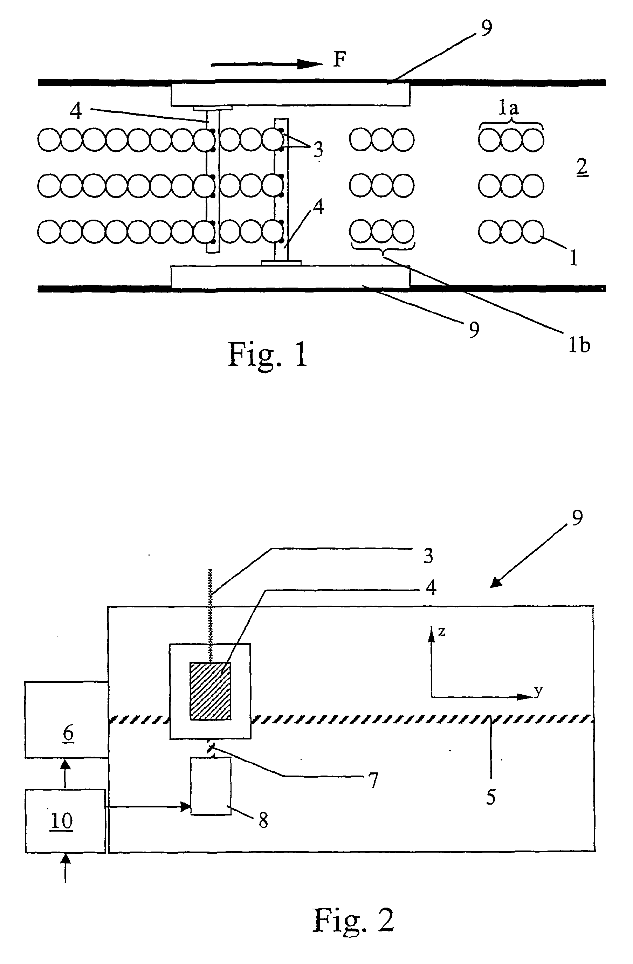

Figur 1 zeigt bereits gruppierte und sich noch im Stückgutstrom befindliche Stückgüter 1 wie zum Beispiel Dosen. Diese werden aufrecht stehend auf einem Transportmittel 2 mehrreihig durch Reibschluss in Förderrichtung F transportiert, das die Transportebene bildet. Zum Gruppieren stehen Einteilerfinger 3, die sich auf Einteilerleisten 4 befinden, bereit. Diese sind mit den Stückgütern 1 durch die Transportebene von unten in Eingriff bringbar. Das Transportmittel 2 wird beispielsweise durch mehrere mit seitlichen Zwischenabständen parallel verlaufende Förderbänder gebildet, wodurch für die Einteilerfinger 3 ein freier Durchgriff gegeben ist. Im vorliegenden Fall verfügt die Gruppiervorrichtung über zwei unabhängige Gruppen von Einteilerfingern 3, die auf zwei nicht miteinander mechanisch verbundenen Einteilerleisten 4 angeordnet sind. Zur besseren Unterscheidung sind diese Bauteile in der Figurenfolge 3a bis 3c mit den Bezugszeichen 3a, 3b bzw. 4a und 4b kenntlich gemacht. Die Einteilerleisten 4 ihrerseits sind als parallel zur Transportebene verlaufende Kragarme ausgebildet, die ihre Befestigung an jeweils einem eigenen vertikalen Kreuztisch 9 seitlich außerhalb und unterhalb des Transportmittel 2 finden.

Figur 2 zeigt einen Kreuztisch 9 in einer Seitenansicht, der die Einteilerleisten 4 und damit die Einteilerfinger 3 in Z-bzw. Y-Richtung bewegt, wobei die Y-Richtung der Förderrichtung F entspricht und die Z-Richtung senkrecht zur Transportebene ausgerichtet ist. Die Einteilerleiste 4 besitzt je eine eigene motorische Antriebseinheit 6 für die Bewegung in Y-Richtung und eine motorische Antriebseinheit 8 für die Bewegung in Z-Richtung. Die Antriebseinheiten 6, 8 sind bevorzugt elektrische Servomotoren. Durch die Betätigung der Antriebe 6 und 8 wird die Einteilerleiste 4 - und damit auch die an dieser befestigten Einteilerfinger 3 - entlang der Gewindespindel 5 und 7 in Y- und/oder Z-Richtung bewegt. Die Betätigung des Motors 6 ist für die Bewegung der Einteilerleiste 4 entlang der Gewindespindel 5, die Betätigung des Motors 8 für die Bewegung der Einteilerleiste 4 und damit auch der Einteilerfinger 3 entlang der Gewindespindel 7 verantwortlich. Der Motor 6 ist dabei ortsfest an einem Gestell befestigt, während der Motor 8 längs zur Y-Achse durch die Gewindespindel 5 verfahrbar ist. Der Übersichtlichkeit halber nicht gezeigt ist hier eine Führung, die die auftretenden Kräfte bei der Bewegung der Einteilerleisten 4 entlang der Gewindespindeln aufnimmt und ihr somit Halt gibt. Auf dieser beschriebenen Führung gleitet in Y-Richtung eine weitere (nicht gezeichnete) Führung, die der Einteilerleiste 4 bei der Bewegung in Z-Richtung Halt gibt.

Beide Motoren 6 und 8 stehen mit einem Steuergerät 10 in Verbindung. Die Verbindung kann im Gegensatz zur Darstellung bidirektional ausgebildet sein, sodass auch Signale vom Motor 6, 8 an das Steuergerät 10 übertragen werden können. Das Steuergerät 10 kann z.B. als handelsüblicher PC oder als Industrie PC ausgebildet sein. Es ist aber auch möglich, dass es sich bei dem Steuergerät 10 um ein spezielles Programmiergerät (Servoachsensteuerung) oder um eine herkömmliche SPS handelt. Von diesem Steuergerät 10 empfangen die beiden Motoren 6 und 8 ihre auszuführenden Bewegungssignale wie z.B. Verfahrwege, Geschwindigkeits- und/oder Beschleunigungswerte in Y- und Z-Richtung. Durch überlagerte Bewegungen entlang beider Achsen sind variable Bahnkurven und Geschwindigkeitsprofile realisierbar, die ggf. für jede Stückgutsorte vorab gespeichert werden können und bei einem Sortenwechsel nur noch abgerufen werden müssen. Mechanische Einstellarbeiten sind damit entbehrlich. Ferner sind damit bei Bedarf im laufenden Betrieb problemlos unregelmäßige Gruppiervorgänge, d.h. mit unterschiedlichen Abständen der aufeinander Stückgutgruppen möglich.

Die Einteilerfinger 3 sind im Wesentlichen starr ausgebildet. In der Ausführungsform nach Figur 2 befinden sie sich mechanisch fest verbunden mit den der Transportebene zugewandten Seiten der Einteilerleisten 4. Die Bewegung der Einteilerfinger 3 in Z-Richtung erfolgt also durch die Bewegung der Einteilerleisten 4 in Z-Richtung.

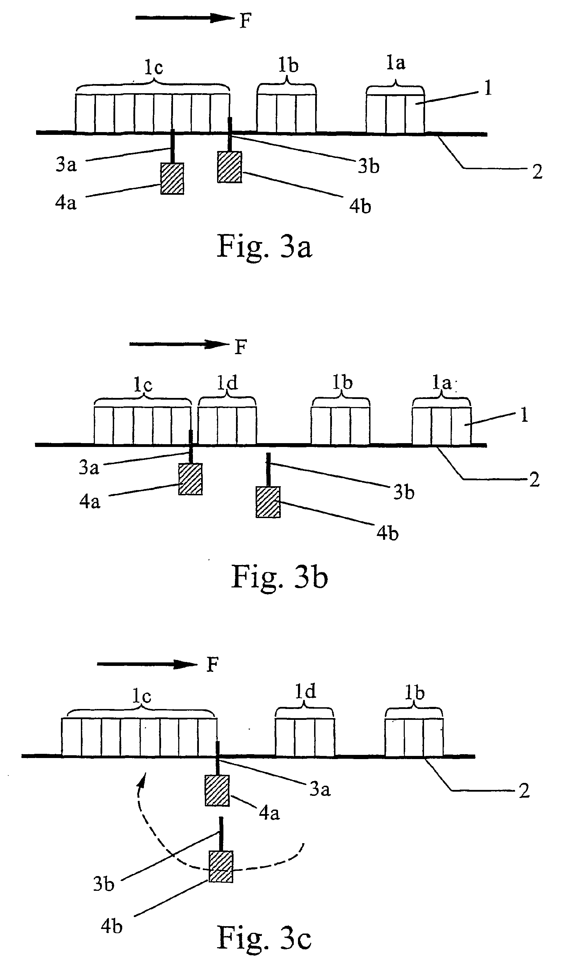

Die Figuren 3a bis 3c zeigen einen kompletten Gruppiervorgang von Stückgütern 1:

Die Einteilerfinger 3a auf der Einteilerleiste 4a werden gerade von unten in Eingriff mit einem im wesentlichen geschlossenen Stückgutstrom 1c gebracht. Die Einteilerfinger 3b der in Förderrichtung F um eine Stückgutgruppenlänge vorauslaufenden Einteilerleiste 4b stehen bereits im Eingriff mit Stückgütern 1. In dieser Phase bewegen sich die Einteilerleisten langsamer als das Transportmittel 2, d.h. das Stückgut im Stückgutstrom 1c wird an die vorauslaufenden Einteilerfinger gedrängt. Durch die Differenzgeschwindigkeit des Transportmittels 2 und der Einteilerleiste 4b bewegen sich die bereits abgetrennten Stückgutgruppen 1a und 1b schneller als der von den Einteilerfingern noch gebremste Stückgutstrom 1c. Dadurch entstehen die dargestellten Abstände zwischen den einzelnen Stückgutgruppen 1a und 1b, die bereits von dem im wesentlichen geschlossenen Stückgutstrom 1c separiert sind. Diese Abstände entsprechen in Addition mit der Länge der Stückgutgruppen beispielsweise dem Teilungsmaß einer nachgeordneten, nicht dargestellten Verpackungsmaschine, die Stückgutgruppen in Folien- oder Kartonzuschnitte einhüllt. Ist die Abtrennung der Stückgutgruppe 1b nach Erreichen des gewünschten Abstandes vom Stückgutstrom 1c vollständig erreicht, so wird die Einteilerleiste 4b während einer ggf. kurzzeitig beschleunigten Vorwärtsbewegung aus der Transportebene nach unten heraus gefahren, wie dies in Fig. 3b sichtbar ist. Inzwischen ist der Einteilerfinger 3a ganz in den Stückgutstrom 1c eingefahren, wodurch sich auf Grund der Differenzgeschwindigkeit des Transportmittels 2 und der Einteilerleiste 4a nun eine neue Stückgutgruppe 1d am vorlaufenden Ende vom im wesentlichen geschlossenen Stückgutstrom 1c abzulösen beginnt.

Um erneut eine Gruppierung des Stückgutstromes 1c durchführen zu können, bewegt sich die Einteilerleiste 4b mit den Einteilerfingern 3b entgegen der Förderrichtung F der Behälter unterhalb der Einteilerleiste 4a zurück zu einer Ausgangsposition, an der sich in Fig. 3a die Einteilerleiste 4a mit den Einteilerfingern 3a befand. Von dort aus können nun die Einteilerfinger 3b nach einer Bewegungsumkehr wieder in Eingriff mit dem im Wesentlichen geschlossenen Stückgutstrom 1c gebracht werden. Durch diese immer wiederkehrende Arbeitsweise kann der im wesentlichen geschlossener Stückgutstrom 1c in einzelne Stückgutgruppen aufgeteilt werden.

## Patentansprüche

1. Vorrichtung zum Gruppieren von Stückgut (1), das in einem im Wesentlichen geschlossenen Strom von einem Transportmittel (2) entlang einer Transportebene zugeführt und durch mindestens einen von unten quer zur Transportebene in den Strom einführbaren Einteilerfinger (3) längs zur Förderrichtung (F) gruppiert wird wobei für den mindestens einen Einteilerfinger (3) Antriebsmittel (6,8) vorgesehen sind, die eine Bewegung des mindestens einen Einteilerfingers (3) quer zur Transportebene (z-Richtung) unabhängig von einer Bewegung längs zur Förderrichtung (F) (Y-Richtung) und umgekehrt frei einstellbar ausführen können, **dadurch gekennzeichnet, dass** die Bewegung in Y- und Z-Richtung entlang von Gewindespindeln (5, 7) durchgeführt wird.

2. Vorrichtung nach Anspruch 1, **dadurch gekennzeichnet, dass** die Antriebsmittel (6, 8) motorisch sind und mit einem Steuergerät (10), insbesondere einer speicherprogrammierbaren Steuerung in Verbindung stehen, die die Bewegung der Antriebsmittel (6,8) nach vorgebbaren Umlaufbahnen und/oder Geschwindigkeitsprofilen für den mindestens einen Einteilerfinger (3) koordiniert.

3. Vorrichtung nach Anspruch 1 und/oder Anspruch 2, **dadurch gekennzeichnet, dass** zwei Einteilerleisten (4) mit jeweils mindestens einem Einteilerfinger (3) vorhanden sind.

4. Vorrichtung nach Anspruch 3, **dadurch gekennzeichnet, dass** die Bewegung der einen Einteilerleiste (4) in Förderrichtung (F) unabhängig und frei einstellbar von der Bewegung der anderen Einteilerleiste (4) in Förderrichtung (F) ist.

5. Vorrichtung nach mindestens Anspruch 3 oder Anspruch 4, **dadurch gekennzeichnet, dass** die Abstände der Einteilerleisten (4) frei wählbar und einstellbar sind.

6. Vorrichtung nach mindestens einem der vorangegangenen Ansprüche 3-5, **dadurch gekennzeichnet, dass** sowohl jeder Einteilerleiste (4) als auch jedem dazugehörigen mindestens einen Einteilerfinger (3) jeweils mindestens ein motorisches Antriebsmittel (6,8) zur Ausführung der Bewegung in y- und z-Richtung zugeordnet ist.

7. Vorrichtung nach Anspruch 6, **dadurch gekennzeichnet, dass** die motorischen Antriebsmittel (6,8) Servomotoren sind.

8. Vorrichtung nach Anspruch 6, **dadurch gekennzeichnet, dass** es sich bei den motorischen Antriebsmitteln (6,8) um Linearmotoren handelt.

9. Vorrichtung nach mindestens einem der vorangegangenen Ansprüche, **dadurch gekennzeichnet, dass** bei dem Gruppiervorgang jedes Stückgut (1) von zwei Einteilerfingern (3) geführt wird.

10. Vorrichtung nach mindestens einem der vorangegangenen Ansprüche, **dadurch gekennzeichnet, dass** es sich bei dem zu gruppierenden Stückgut (1) um Flaschen, Dosen oder dergleichen Behälter zum Aufbewahren von Lebensmitteln handelt.

11. Vorrichtung nach mindestens einem der vorangegangenen Ansprüchen 3-10, **dadurch gekennzeichnet, dass** die Bewegung des mindestens einen Einteilerfingers (3) in z-Richtung durch eine Bewegung der Einteilerleiste (4) verursacht wird.

12. Vorrichtung nach mindestens einem der vorangegangenen Ansprüche 3-10, **dadurch gekennzeichnet, dass** die Bewegung des mindestens einen Einteilerfingers (3) in z-Richtung durch die Bewegung desselben aus der bzw. in die Einteilerleiste (4) verursacht wird.

13. Vorrichtung nach mindestens einem der vorangegangenen Ansprüche 3-12, **dadurch gekennzeichnet, dass** die Einteilerleiste (4) mit dem mindestens einen Einteilerfinger (3) nach dem Gruppiervorgang nach unten aus der Transportebene gebracht wird.

14. Vorrichtung nach Anspruch 3 bis 14, **dadurch gekennzeichnet, dass** die aus der Transportebene gebrachte Einteilerleiste (4) unter der anderen Einteilerleiste (4) und entgegen der Förderrichtung (F) der Stückgüter (1) in eine Ausgangsposition gebracht wird, von wo aus sie wieder zu Gruppierzwecken in die Transportebene einfahren kann.

15. Vorrichtung nach mindestens einem der vorangegangenen Ansprüche 3-14, **dadurch gekennzeichnet, dass** die Geschwindigkeit der mindestens einen Einteilerleiste (4) in Förderrichtung (F) geringer ist als die Vorschubgeschwindigkeit des Transportmittels (2).

16. Vorrichtung nach mindestens einem der vorangegangenen Ansprüche 3-14, **dadurch gekennzeichnet, dass** die Geschwindigkeit der mindestens einen Einteilerleiste (4) in Förderrichtung (F) höher ist als die Vorschubgeschwindigkeit des Transportmittels (2).

17. Vorrichtung nach mindestens einem der vorangegangenen Ansprüche 3-16, **dadurch gekennzeichnet, dass** die mindestens eine Einteilerleiste (4) als Kragarm ausgebildet ist.

18. Vorrichtung nach Anspruch 18, **dadurch gekennzeichnet, dass** der Kragarm an einem Kreuztisch seitlich außerhalb der Transportebene befestigt ist.

19. Vorrichtung nach mindestens einem der Ansprüche 18 bis 19, **dadurch gekennzeichnet, dass** die Kragarme unterhalb der Transportebene angebracht sind.

## Claims

1. Device for grouping piece goods (1), which are fed by transport means (2) in an essentially closed stream along a transport plane and are grouped longitudinally in the transport direction (F) by at least one distribution finger (3) that can be introduced into the stream from below transversally to the transport plane, in which drive elements (6, 8) are provided for the at least one distribution finger (3), which can execute a free displacement of the at least one distribution finger (3) transversally to the transport plane (z-direction) independently of a displacement along the transport direction (F) (y-direction) and vice versa, **characterised in that** the movement in the y- and z-direction is executed along elevating screws (5, 7).

2. Device according to claim 1, **characterised in that** the drive elements (6, 8) are motor-driven and are connected to a control module (10), in particular a programmable controller, which coordinates the displacement of the drive elements (6, 8) according to preselectable circuits and/or speed profiles for the at least one distribution finger (3).

3. Device according to claim 1 and/or claim 2, **characterised in that** two distribution bars (4), each with at least one distribution finger (3) are present.

4. Device according to claim 3, **characterised in that** the displacement of one distribution bar (4) in the transport direction (F) is independent of and freely adjustable from the displacement of the other distribution bar (4) in the transport direction (F).

5. Device according to at least claim 3 or claim 4, **characterised in that** the clearances of the distribution bars (4) are freely selectable and adjustable.

6. Device according to at least one of the foregoing claims 3-5, **characterised in that** both each distribution bar (4) and each associated at least one distribution finger (3) are allotted to at least one motor-driven drive element (6, 8) to execute the displacement in the y- and z-directions.

7. Device according to claim 6, **characterised in that** the motor-driven drive elements (6, 8) are servo motors.

8. Device according to claim 6, **characterised in that** the motor-driven drive elements (6, 8) are linear motors.

9. Device according to at least one of the foregoing claims, **characterised in that** each piece good (1) is guided by two distribution fingers (3) during the grouping operation.

10. Device according to at least one of the foregoing claims, **characterised in that** the piece goods (1) to be grouped are bottles, cans or similar containers to store foodstuffs.

11. Device according to at least one of the foregoing claims 3-10, **characterised in that** the displacement of the distribution finger(s) (3) in the z-direction is caused by displacement of the distribution bar (4).

12. Device according to at least one of the foregoing claims 3-10, **characterised in that** the displacement of the at least one distribution finger (3) in the z-direction is caused by displacement of the same from or into the distribution bar (4).

13. Device according to at least one of the foregoing claims 3-10, **characterised in that** the distribution bar (4) is moved downwards out of the transport plane with the at least one distribution finger (3) after the grouping operation.

14. Device according to claims 3 to 14, **characterised in that** after being moved out of the transport plane the distribution bar (4) is moved under the other distribution bar (4) and against the transport direction (F) of the piece goods (1) into a starting position from where it can again travel into the transport plane for grouping purposes.

15. Device according to at least one of the foregoing claims 3-14, **characterised in that** the speed of the at least one distribution bar (4) in the transport direction (F) is lower than the feed speed of the transport means (2).

16. Device according to at least one of the foregoing claims 3-14, **characterised in that** the speed of the at least one distribution bar (4) in the transport direction (F) is higher than the feed speed of the transport means (2).

17. Device according to at least one of the foregoing claims 3-16, **characterised in that** the at least one distribution bar (4) is in the form of a cantilever arm.

18. Device according to claim 18 [sic], **characterised in that** the cantilever arm is fixed to a cross table at the side outside the transport plane.

19. Device according to at least one of claims 18 to 19, **characterised in that** the cantilever arms are fitted below the transport plane.

## Revendications

1. Dispositif pour grouper des pièces (1) arrivant selon un flux pratiquement fermé d'un moyen de transport (2) suivant un plan de transport et groupées par au moins un doigt de répartition (3) qui s'introduit par en dessous, transversalement au plan de transfert, dans le flux, pour être groupées le long de la direction de transfert (F), des moyens d'entraînement (6, 8) étant prévus pour au moins un doigt de répartition (3), ces moyens permettant de commander le mouvement d'au moins un doigt de répartition (3) transversalement au plan de transport (direction Z) indépendamment d'un mouvement le long d'une direction de transfert (F) (direction Y) et inversement, de façon librement réglable,
**caractérisé en ce que**
le mouvement dans la direction (Y) et dans la direction (Z) est effectué le long de broches filetées (5, 7).

2. Dispositif selon la revendication 1,
**caractérisé en ce que**
les moyens d'entraînement (6, 8) sont des moyens motorisés et ils coopèrent avec un appareil de commande (10) notamment une commande programmable par mémoire, qui assure la coordination du mouvement des moyens d'entraînement (6, 8) selon des trajectoires de circulation prédéfinies et/ou des profils de vitesses pour au moins un doigt de répartition (3).

3. Dispositif selon la revendication 1 et/ou la revendication 2,
**caractérisé par**
deux barrettes de répartition (4) avec chaque fois au moins un doigt de répartition (3).

4. Dispositif selon la revendication 3,
**caractérisé en ce que**
le mouvement de l'une des barrettes de répartition (4) dans la direction de transfert (F) se fait indépendamment et de manière réglable librement par rapport au mouvement de l'autre barrette de répartition (4) dans la direction de transfert (F).

5. Dispositif selon la revendication 3 ou 4,
**caractérisé en ce que**
les écarts des barrettes de répartition (4) se sélectionnent et se règlent librement.

6. Dispositif selon les revendications 3 à 5,
**caractérisé en ce qu'**
au moins un moyen d'entraînement à moteur (6, 8) est associé à la fois à chaque barrette de répartition (4) et aussi à chaque doigt de répartition (3) correspondant, pour effectuer le mouvement dans la direction (Y) et dans la direction (Z).

7. Dispositif selon la revendication 6,
**caractérisé en ce que**
les moyens d'entraînement à moteur (6, 8) sont des servomoteurs.

8. Dispositif selon la revendication 6,
**caractérisé en ce que**
les moyens d'entraînement à moteur (6, 8) sont des moteurs linéaires.

9. Dispositif selon les revendications précédentes,
**caractérisé en ce que**
l'opération de groupage de chaque pièce (1) est exécutée par deux doigts de répartition (3).

10. Dispositif selon les revendications précédentes,
**caractérisé en ce que**
les pièces (1) à grouper sont des bouteilles, des boîtes ou des récipients analogues utilisés pour la conservation de produits alimentaires.

11. Dispositif selon les revendications 3 à 10,
**caractérisé en ce que**
le mouvement d'au moins un doigt de répartition (3) dans la direction (Z) est produit par un mouvement de la barrette de répartition (4).

12. Dispositif selon les revendications 3 à 10,
**caractérisé en ce que**
le mouvement d'au moins un doigt de répartition (3) dans la direction (Z) est produit par le mouvement de celui-ci, rentrant ou sortant de la barrette de répartition (4).

13. Dispositif selon les revendications 3 à 12,
**caractérisé en ce que**
la barrette de répartition (4) est dégagée du plan de transport par en dessous après l'opération de groupage, avec au moins un doigt de répartition (3).

14. Dispositif selon les revendications 3 à 14,
**caractérisé en ce que**
la barrette de répartition (4) dégagée du plan de transport est mise sous l'autre barrette de répartition (4) et dans la direction opposée à la direction de transfert (F) des pièces (1) dans une position de sortie et à partir de celle-ci, elle peut de nouveau pénétrer dans le plan de transport pour assurer des groupages.

15. Dispositif selon les revendications 3 à 14,
**caractérisé en ce que**
la vitesse d'au moins une barrette de répartition (4) dans la direction de transfert (F) est inférieure à la vitesse d'avance du moyen de transport (2).

16. Dispositif selon les revendications 3 à 14,
**caractérisé en ce que**
la vitesse d'au moins une barrette de répartition (4) dans la direction de transfert (F) est supérieure à la vitesse d'avance du moyen de transport (2).

17. Dispositif selon les revendications 3 à 16,
**caractérisé en ce qu'**
au moins une barrette de répartition (4) est réalisée sous la forme d'un bras en porte-à-faux.

18. Dispositif selon la revendication 17,
**caractérisé en ce que**
le bras en porte-à-faux est fixé à un plateau en croix, latéralement à l'extérieur du plan de transport.

19. Dispositif selon les revendications 18 et 19,
**caractérisé en ce que**
le bras en porte-à-faux est installé sous le plan de transport.
